# EUROPÄISCHE PATENTANMELDUNG

(11) **EP 1 156 545 A2**
(43) Veröffentlichungstag der Anmeldung: **21.11.2001**
(21) Anmeldenummer: 01110522.8
(22) Anmeldetag: 28.04.2001
(51) Int. Cl.: H01M 8/04

(54) **Brennstoffzellensystem sowie Verfahren zum Betreiben des Brennstoffzellensystems**

(30) Priorität: 19.05.2000 DE 10024570
(71) Anmelder: XCELLSIS GmbH, 73230 Kirchheim/Teck-Nabern (DE)
(72) Erfinder: Kaufmann, Lars, 73230 Kirchheim (DE)
(74) Vertreter: Kaufmann, Ursula Josefine, Dr.rer.nat. Dipl.-Phys.

(57) **Zusammenfassung**

Die Erfindung betrifft ein Brennstoffzellensystem mit einer Brennstoffzelleneinheit mit Anode und Kathode, mit einem Medien-Zustromweg zur Zuführung von im wesentlichen reinem Wasserstoff zu der Anode und einem Medien-Zustromweg für die Kathode, einem Anodenabgas-Strömungsweg und einem Kathodenabgas-Strömungsweg, wobei im Zustromweg der Kathode ein Verdichter zur Luftversorgung der Kathode vorgesehen ist, wobei im Kathodenabgas-Strömungsweg ein katalytischer Brenner angeordnet ist und der Anodenabgas-Strömungsweg in den katalytischen Brenner und/oder stromauf des katalytischen Brenners in den Kathodenabgas-Strömungsweg mündet und der vereinigte, katalytisch umgesetzte Brennstoffzellenabgasstrom in eine Expansionsmaschine geleitet ist, sowie ein Verfahren zum Betreiben des Brennstoffzellensystems.

## Beschreibung

Die Erfindung betrifft ein Brennstoffzellensystem und ein Verfahren zum Betreiben des Brennstoffzellensystems gemäß den unabhängigen Ansprüchen.

Aus der US-A1-3,972,731 ist ein Brennstoffzellensystem bekannt, bei dem zur Luftversorgung der Brennstoffzellen-Kathode ein Kompressor eingesetzt wird, der mit einer Turbine über eine gemeinsame Welle verbunden ist. Die Brennstoffzellen-Anode wird mit einem wasserstoffreichen Reformat beaufschlagt, welches durch eine endotherme Reaktion in einem Dampfreformer erzeugt wird. Der Dampfreformer ist thermisch mit einem katalytischen Brenner gekoppelt. Das heiße und feuchte Kathodenabgas wird in einem Wasserabscheider stark abgekühlt, entfeuchtet und anschließend durch einen im Abgasstrang angeordneten katalytischen Brenner wieder erhitzt. Das erhitzte Abgas treibt die mit dem Kompressor gekoppelte Turbine an.

Brennstoffzellensysteme benötigen zur Luftversorgung der Kathodenseite üblicherweise eine Verdichtungsmaschine. Bei methanolbetriebenen Brennstoffzellensystemen ist ein hoher Systemdruck an sich vorteilhaft. So wird z.B. die Wasserbilanz des Systems verbessert. Weiterhin steigt der Wirkungsgrad der Brennstoffzelle durch den höheren Sauerstoffpartialdruck, und die Druckverluste im Brennstoffzellensystem werden minimiert.

Ein erhöhtes Druckniveau ist jedoch mit einer höheren Aufnahmeleistung der Verdichtungsmaschine verbunden, was zu Wirkungsgradeinbußen und bei gleicher Nutzleistung zu einer Vergrößerung des Brennstoffzellensystems führt.

Es ist die Aufgabe der Erfindung, ein PEM-Brennstoffzellensystem sowie ein Verfahren zum Betreiben des Systems anzugeben, das eine günstige Ausnutzung von KathodenAbgas zur Erhöhung der Nutzleistung des Systems erlaubt.

Diese Aufgabe wird durch die Merkmale des Anspruchs 1 bzw. Anspruch 7 gelöst.

Bei einem erfindungsgemäßen Brennstoffzellensystem, bei dem die Brennstoffzelleneinheit vorzugsweise mit reinem Wasserstoffgas betrieben wird, ist im Kathodenabgas-Strömungsweg ein katalytischer Brenner angeordnet, wobei der Anodenabgas-Strömungsweg in den katalytischen Brenner und/oder stromauf des katalytischen Brenners in den Kathodenabgas-Strömungsweg mündet. Der vereinigte, katalytisch umgesetzte Brennstoffzellenabgasstrom ist mit hoher Temperatur in eine Expansionsmaschine einleitbar.

Der besondere Vorteil liegt darin, daß bei einem derartigen Brennstoffzellensystem, bei dem die Brennstoffzelleneinheit mit möglichst reinem Wasserstoff betrieben wird, die Möglichkeit besteht, im Teillastbereich mit geringem Wasserstoffüberschuß zu arbeiten und im Hochlastbereich den Wasserstoffüberschuß so zu erhöhen, daß eine große Menge an Abgasenergie zur Verfügung steht.

Bei einer besonders bevorzugten Verschaltungsart der Brennstoffzelleneinheit, bei der Brennstoffzellenstapel strömungstechnisch in Serien- und Parallelschaltung zusammengeschaltet werden, kann der Wasserstoffüberschuß über Teillastbereich und Vollastbereich optimiert werden. Wird die Brennstoffzelleneinheit mit reinem oder gut gereinigtem Wasserstoff betrieben, ist sichergestellt, daß auch die in Strömungsrichtung letzte Zelle oder der letzte Brennstoffzellenstapel Wasserstoff in ausreichender Reinheit erhält.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig. 1: eine Prinzipdarstellung eines bevorzugten erfindungsgemäßen Brennstoffzellensystems mit einem Mischer im Abgasstrom,
- Fig. 2: eine weitere bevorzugte Ausführungsform eines Brennstoffzellensystems ohne Mischer und
- Fig. 3: eine bevorzugte Ausführungsform eines Brennstoffzellensystems,
- Fig. 4: eine günstige Verschaltung von einzelnen Brennstoffzellenstapeln innerhalb einer einzigen Brennstoffzelleneinheit in einem bevorzugten Brennstoffzellensystem und
- Fig. 5: eine weitere bevorzugte Ausgestaltung des Brennstoffzellensystems mit Gaserzeugungssystem.

Die Erfindung ist sowohl für stationäre Brennstoffzellensysteme geeignet als auch für solche Brennstoffzellenanlagen, die für den Betrieb von Fahrzeugen bestimmt sind. Besonders vorteilhaft ist die Erfindung für Brennstoffzellensysteme, die üblicherweise bei niedrigen Temperaturen betrieben werden, wie etwa Brennstoffzellensysteme mit Polymerelektrolytmembranen. In derartigen PEM-Brennstoffzellensystemen stehen hohe Temperaturen deutlich über 100°C im System üblicherweise nicht zur Verfügung oder sind der Temperaturbilanz wegen nicht erwünscht.

Vorteilhaft ist die Erfindung bei solchen Brennstoffzellensystemen, bei denen die Brennstoffzelleneinheit mit sehr reinem Wasserstoffgas versorgt wird. Ein bevorzugtes Brennstoffzellensystem wird vollständig mit reinem Wasserstoffgas betrieben, d.h. es weist kein Gaserzeugungssystem auf. Ein anderes bevorzugtes Brennstoffzellensystem weist ein Gaserzeugungssystem auf, in dem Wasserstoff aus einem Brennmittel erzeugt wird, wobei der Wasserstoff durch geeignete Verfahren, etwa mittels Palladiummembranverfahren, gereinigt und als hochreiner Wasserstoff der Brennstoffzelleneinheit zugeführt wird. Der Wasserstoff, der in die Brennstoffzelleneinheit gelangt, ist nicht nur weitgehend von katalysatorschädlichen Verunreinigungen wie CO befreit, sondern auch von Verunreinigungen wie N₂ oder CO₂, welche üblicherweise in einem Reformat enthalten sind. Günstige Brennmittel können Stoffe wie Alkohole, etwa Methanol, Erdgas, Kohlenwasserstoffe, wie etwa Benzin, Ether und dergleichen sein.

In einer ersten bevorzugten Ausgestaltung wird die Brennstoffzelleneinheit mit einem lastabhängigen Wasserstoffüberschuß betrieben.

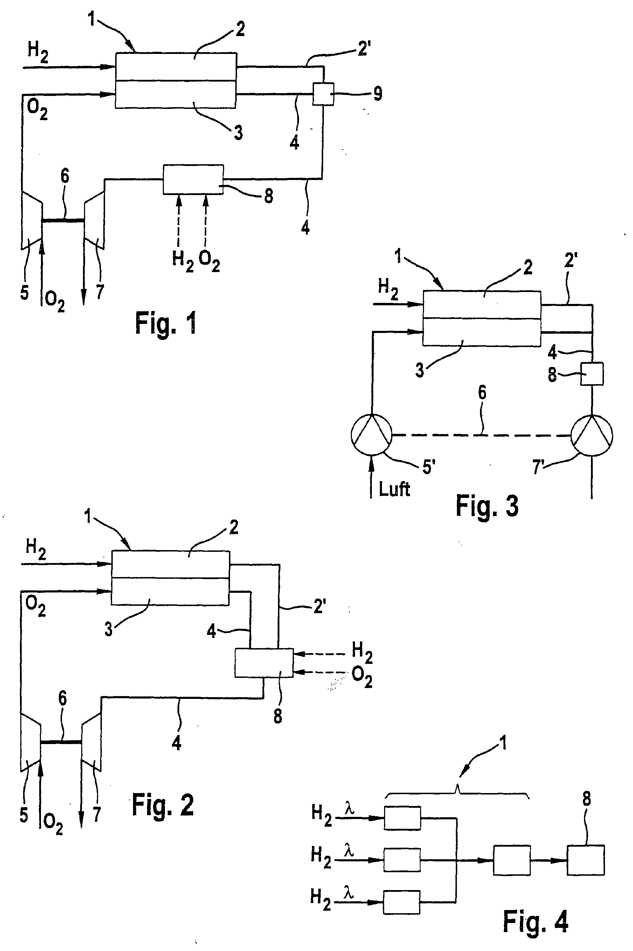

In Fig. 1 ist bevorzugtes Brennstoffzellensystem dargestellt. Eine Brennstoffzelleneinheit 1 weist eine Anode 2 und eine Kathode 3 auf. Die Brennstoffzelleneinheit 1 ist vereinfacht als eine einzige Zelle dargestellt, kann aber auch einen Stapel von Brennstoffzellen repräsentieren. Insbesondere kann eine solche Brennstoffzelleneinheit 1 durch Brennstoffzellenstapel gebildet sein, die strömungstechnisch parallel und/oder in Serie geschaltet sind.

Die Anode 2 wird über einen Medien-Zustromweg mit Wasserstoff H₂, z.B. aus einem Wasserstoffvorrat, beaufschlagt. Das Abgas aus der Anode 2 wird über einen Anodenabgas-Strömungsweg 2' aus der Brennstoffzelleneinheit 1 abgeführt.

Ein Verdichter 5 ist in einem Medien-Zustromweg für die Kathode 3 angeordnet und verdichtet ein sauerstoffhaltiges Medium O₂, bevorzugt Luft, welches der Kathode 3 mit hohem Druck zugeführt wird. In der Brennstoffzelleneinheit 1 findet dann die Reaktion zwischen Sauerstoff und Wasserstoff statt. Der Anodenabgasstrom kann dem Kathodenabgasstrom in einem Mischer 9 zugemischt werden. Im weiteren Kathodenabgas-Strömungsweg 4 ist ein katalytischer Brenner 8 angeordnet, in dem das Kathodenabgas und das Anodenabgas katalytisch verbrannt werden und die Abgastemperatur des Brennstoffzellenabgases erhöht wird. Dazu kann über eine Zudosiereinrichtung dem katalytischen Brenner 8 zusätzlich Brennstoff, etwa Wasserstoff und/oder Sauerstoff, zudosiert werden. Dies ist in der Figur durch je eine gestrichelte Pfeillinie angedeutet.

Das heiße Kathodenabgas gelangt über den Kathodenabgas-Strömungsweg 4 in eine Expansionsmaschine 7. Die Expansionsmaschine 7 ist vorzugsweise mit dem Verdichter 5 gekoppelt, besonders bevorzugt mechanisch über eine gemeinsame Welle 6. Die bevorzugte Expansionsmaschine 7 ist eine Turbine und kann durch die aus dem heißen Abgas rekuperierte Energie den Verdichter 5 antreiben.

Eine weitere Verschaltung zeigt Fig. 2. Gleiche Elemente sind mit denselben Bezugszeichen wie in Fig. 1 bezeichnet.

Wasserstoff H₂ wird über einen Anoden-Zustromweg einer Anode 2 einer Brennstoffzelleneinheit 1 zugeführt. Die Kathode 3 wird über einen Medien-Zustromweg für die Kathode 3 mit sauerstoffhaltigem Medium O₂ versorgt, vorzugsweise Luft. Dieses Medium wird in einem im Medien-Zustromweg angeordneten Verdichter 5, vorzugsweise einem Kompressor, auf ein gewünschtes Druckniveau verdichtet und der Kathode 3 zugeführt. Ein bevorzugtes Druckniveau liegt oberhalb von etwa 2 bar absolut. Die Kathodenabluft wird in einem Kathodenabgas-Strömungsweg 4 aus der Kathode 3 weggeführt. Anodenabgas aus dem Anodenabgas-Strömungsweg 2' kann dem Kathodenabgas im Kathodenabgas-Strömungsweg 4 zugemischt werden oder jeweils separat einem katalytischen Brenner 8 zugeführt werden. Am oder im katalytischen Brenner 8 kann über eine Zudosiereinrichtung dem Gemisch vorzugsweise wasserstoffhaltiger Brennstoff zusätzlich zudosiert werden. Ein günstiger Brennstoff ist Wasserstoff, Methanol, und/oder Benzin und/oder Methan.

Das Kathodenabgas-Gemisch wird beim Durchströmen des katalytischen Brenners 8 auf eine erste hohe Temperatur T₁, vorzugsweise zwischen 450°C und 1100°C, besonders bevorzugt zwischen 150°C und 1100°C, erhitzt. Das heiße Medium gelangt dann zu einer Expansionsmaschine 7, vorzugsweise einem Turbolader. Die Expansionsmaschine 7 treibt vorzugsweise den Verdichter 5 über eine Kopplung 6 an. Der Verdichter 5 kann einstufig oder auch zwei- oder mehrstufig sein. Vorzugsweise erfolgt die Kopplung über eine gemeinsame Welle 6 zwischen Verdichter 5 und Expansionsmaschine 7. Die Einkopplung der aus dem heißen Abgas rekuperierten Energie kann jedoch auch elektrisch erfolgen; in diesem Fall ist ein Turbogenerator vorzusehen.

Das Abgas wird dabei auf eine zweite Temperatur T₂ abgekühlt, die niedriger als die erste Temperatur T₁ ist, vorzugsweise beträgt die Temperaturdifferenz ΔT zwischen erster Temperatur T₁ und zweiter Temperatur T₂ zwischen 50°C und 200°C.

Aus der Expansionsmaschine 7 wird das abgekühlte Abgas abgeführt. Die noch vorhandene Abgasenergie kann in etwaigen weiteren Heizvorrichtungen des Systems verwendet werden, etwa um Medien auf eine geeignete Betriebstemperatur zu bringen.

In Fig. 3 ist eine weitere bevorzugte Ausführung der Erfindung dargestellt, wobei keine Kopplung zwischen Verdichter 5 und Expander 7 vorgesehen ist. Gleiche Elemente wie in Fig. 1 und 2 sind mit gleichen Bezugszeichen versehen; der Aufbau entspricht dem vorausgehend Beschriebenen. Anstatt des Verdichters 5 ist in der Kathodenzuführung ein Turboverdichter 5' und statt der Expansionsmaschine 7 im Kathodenabgas-Strömungsweg 4 ist eine Turbine mit Generator 7' vorgesehen.

Die Expansionsmaschine 7 kann bei erhöhter Abgastemperatur eine erhebliche Leistung in das System bzw. in den Verdichter 5 zurückführen. Ein etwaiger elektrischer Antrieb des Verdichters 5 kann dadurch kleiner ausgelegt werden als ohne die erfindungsgemäße Anordnung.

Werden die Abgastemperaturen T₁ im katalytischen Brenner 8 sehr stark erhöht, so kann die Möglichkeit genutzt werden, im Vollastfall die notwendige Verdichterleistung noch weiter zu senken und somit die Nutzleistung des Brennstoffzellensystems zu erhöhen. Somit kann zum einen die erforderliche Brennstoffzellenleistung und zum anderen das Gesamtsystem bei gleicher Nutzleistung verkleinert werden. Dies hat positive Auswirkungen auf Kosten, Volumen und Masse des Brennstoffzellensystems.

Im extremen Auslegungsfall kann die Verdichter-/Expansionsmaschinengruppe 5, 7 auch den Generatorbetrieb erreichen, d.h. die Expansionsmaschine 7 erzeugt soviel Energie, daß nicht nur die Verdichtung vollständig bestritten werden kann, sondern auch noch an einen elektrischen Antriebsmotor des Verdichters 5 elektrische Energie abgeben kann. Diesem extremen Auslegungsfall entsprechen sehr hohe Abgastemperaturen, z.B. zwischen 600°C bis 1100°C. In diesem vorteilhaften Zustand, wenn Expansionsmaschine 7 und der Verdichter 5 als Generator zusammenwirken, erhöht der Generator die Nutzleistung des Brennstoffzellensystems.

Wird die Verdichter-/Expansionsmaschinen-Gruppe 5, 7 gesteuert, so wird der Temperaturabfall des Abgases über der Expansionsmaschine 7 mittels eines Kennfeldes in einem Datenspeicher, vorzugsweise in einer Steuereinrichtung, abgelegt und die Zudosiereinrichtung zur Zugabe von Brennstoff in den katalytischen Brenner 8, etwa ein Dosierventil, im Betrieb entsprechend eingestellt.

Vorzugsweise gibt das Kennfeld den Temperaturabfall abhängig von der Last und dem Druckverhältnis π der Expansionsmaschine 7 an, wobei π das Verhältnis zwischen dem Druck am Expansionsmaschinen-Eingang zu dem Druck am Expansionsmaschinen-Ausgang angibt. So ergibt sich z.B. bei einem System bei Vollast und einem Druckverhältnis von π = 2,5-3 ein Temperaturabfall von z.B. 60°C-120°C über der Expansionsmaschine 7, abhängig von deren Wirkungsgrad.

Aufgrund der hohen Temperaturen ist der Umsatz im katalytischen Brenner 8 trotz einer dort stattfindenden Brennstoffzudosierung sehr gut, so daß keine nennenswerten HC-Emissionen zu befürchten sind, falls nicht Wasserstoffgas, sondern ein anderes wasserstoffhaltiges Medium, z.B. Methanol, als Brennstoff zugegeben wird. Andererseits ist das Temperaturniveau niedrig genug, daß keine Stickoxidbildung stattfindet.

Vorzugsweise ist eine Systemarchitektur zu wählen, bei der zumindest an einer Stelle im Abluftstrang des Systems ein hohes Temperaturniveau herrscht. An dieser Stelle ist zweckmäßigerweise die Expansionsmaschine 7 zu plazieren und gegebenenfalls nachfolgend das Abgas abzukühlen. Die nachfolgenden Druckverluste im Gasströmungsweg sollten minimiert werden.

Üblicherweise ist es bei Brennstoffzellensystemen wünschenswert, die Brennstoffzelleneinheit 1 im Teillastbereich mit möglichst geringem Wasserstoffüberschuß zu betreiben. Bei einem Wasserstoffverhältnis λ=1 wird soviel Wasserstoff in der Brennstoffzelle verbraucht, wie angeboten wird. Es gelangt kein Wasserstoff in das Anodenabgas. Andererseits ist ein nennenswerter Wasserstoffüberschuß gegenüber dem Sauerstoff in der Kathode 3 für eine zufriedenstellende stabile Reaktion notwendig. Daher wird üblicherweise die Brennstoffzelleneinheit 1 mit Wasserstoffüberschuß bei λ=1,1 oder mehr betrieben. Um einen Wasserstoffverlust bei einem λ>1 zu vermeiden, kann das Anodenabgas zwar rezykliert werden und so der Wasserstoff aus dem Abgas wieder zur Reaktion in der Brennstoffzelle 1 eingesetzt werden. Dies erfordert jedoch einen erhöhten System-Aufwand. Bei einem offenen System würde der überschüssige, nicht verbrauchte Wasserstoff mit dem Abgas aus dem System entfernt.

Das erfindungsgemäße Brennstoffzellensystem ermöglicht es daher besonders vorteilhaft, das System zu vereinfachen und günstige Wirkungsgrade bei Teillast und Vollast zu erreichen, auch wenn mit Wasserstoff-Überschuß gearbeitet wird.

Die Verschaltung der Abgasströme hat zur Folge, daß zwischen Kathode 3 und Anode 2 kein unterschiedlicher Druck herrscht, sondern ein automatische Druckausgleich stattfindet. Das Brennstoffzellensystem bei dem die Brennstoffzelleneinheit 1 mit Wasserstoffgas betrieben wird, kann ohne Rezyklieren des Anodenabgases als sogenanntes offenes System betrieben werden, ohne daß Wasserstoff aus dem Abgas ungenutzt verloren geht. Es treten auch keine unerwünschten Wasserstoffemissionen auf, da diese im katalytischen Brenner 8 umgesetzt werden. Desweiteren können sich durch den offenen Betrieb keine Inertgase bzw. Verunreinigungen in der Brennstoffzelleneinheit 1 anreichern.

Wird das Brennstoffzellensystem mit einem lastabhängigen Lambda-Wert für Wasserstoff betrieben, d.h. wird der Wasserstoff-Überschuß in der Brennstoffzelleneinheit 1 lastabhängig eingestellt, so kann bei Vollast der Anode 2 ein sehr hoher Wasserstoffüberschuß, etwa λ=1,5, d.h. ein Wasserstoffüberschuß von 50%, zugeführt werden. Die Temperatur des Abgases im katalytischen Brenner 8 steigt dann auf sehr hohe Werte an und liefert eine sehr hohe Abgasenergie im Expanderteil 7 bzw. Turbolader 7', die vorteilhaft für den Antrieb des Kompressors 5 genutzt werden kann.

Bei üblichen Systemen muß die Brennstoffzelleneinheit 1 groß genug für Nutzlast und Kompressorleistung ausgelegt werden. Bei einem Brennstoffzellensystem mit 15 kW-Kompressor und 65 kW Nutzleistung muß also z.B. eine 80 kW-Brennstoffzelleneinheit vorgesehen werden. Gemäß der Erfindung kann das System entsprechend verkleinert werden, weil in der Auslegung der Brennstoffzelleneinheit 1 die Kompressorleistung nicht mehr berücksichtigt werden muß, da diese wie beschrieben durch Energie aus dem katalytischen Brenner 8 gedeckt werden kann.

Dafür kann bei Teillast der Wasserstoffüberschuß etwa λ=1,05 oder weniger betragen, so daß bei Teillast also nur ein minimaler Wasserstoffüberschuß eingesetzt werden muß. Besonders günstig ist dies in einem reinen Wasserstoff-Brennstoffzellensystem, bei der keine Gasreinigung notwendig ist, kann aber auch in einem System eingesetzt werden, bei dem reiner Wasserstoff aus dem Reformat einer Gaserzeugungseinheit extrahiert wird. Der überschüssige Wasserstoff kann trotzdem durch die Verbrennung im katalytischen Brenner 8 noch Abgasenergie für den Expander 7 und damit für den Antrieb des Kompressors 5 liefern.

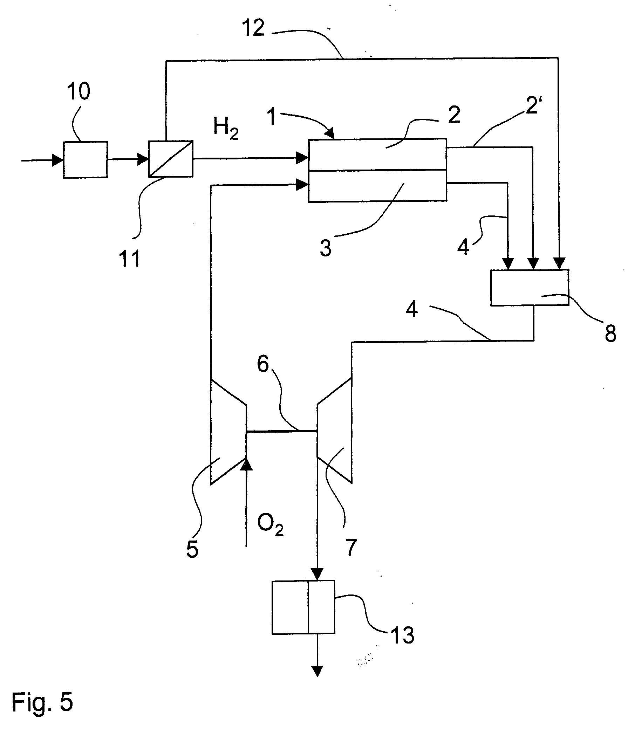

In Fig. 5 ist ein weiteres bevorzugtes Brennstoffzellensystem dargestellt, welches ein Gaserzeugungssystem mit einer Einrichtung 10 zur Wasserstoffgewinnung durch Reformierung oder partielle Oxidation des Brennmittels aufweist, sowie eine Reinigungseinheit 11, um das in der Einrichtung 10 gewonnene wasserstoffreiche Produktgas möglichst weitgehend von Verunreinigungen zu trennen. Gleiche Elemente sind in der Figur mit denselben Bezugszeichen wie in den Figuren 1, 2, 3 bezeichnet.

In der Reinigungseinheit 11 wird Wasserstoff aus dem wasserstoffreiche Produktgas, welches aus der Einrichtung 10 austritt, abgetrennt. Vorzugsweise erfolgt dies mittels eines Membranverfahrens oder anderen geeigneten Verfahren, bei denen Wasserstoff im wesentlichen selektiv auch von inerten Verunreinigungen getrennt werden kann. Bei einem bevorzugten Verfahren diffundiert Wasserstoff selektiv durch eine Palladiummembran und wird von Verunreinigungen getrennt.

Der so gewonnene reine Wasserstoff wird der Anode 2 der Brennstoffzelleneinheit 1 zugeführt. Die Kathode 3 wird wiederum von dem Kompressor 5 mit Sauerstoff bzw. Luft versorgt. Anoden- und Kathodenabgas werden getrennt oder gemischt dem katalytischen Brenner 8 zugeführt, dem zusätzlich auch anderer Brennstoff zugeführt werden kann. Dem katalytischen Brenner 8 wird besonders vorteilhaft als weiterer Brennstoff der verunreinigte Rest des Produktgases zugeführt, aus dem der größte Teil des Wasserstoffs entfernt wurde.

Wird nämlich ein bevorzugtes Palladium-Membranmodul zum Abtrennen des Wasserstoffs eingesetzt, so verbleiben typischerweise 20% des Wasserstoffs im Restgas, während nur 80% des Wasserstoffs durch die Palladium-Membran abgetrennt werden und zur Anode 2 gelangen. Ähnliches gilt für andere Reinigungsverfahren.

Wird das Brennstoffzellensystem z.B. mit einem Wasserstoff-Überschuß von 20%, also einem Wasserstoff-Lambda-Wert von λ=1,2 betrieben, so bedeutet dies, daß im Restgas noch sehr viel Wasserstoff enthalten ist, der für die Brennstoffzelleneinheit 1 verloren ist. Wird mit geringerem Wasserstoff-Überschuß gearbeitet, um die Wasserstoff-Verluste zu verringern, etwa mit λ=1,05, so muß das Membranmodul 11 entsprechend groß ausfallen, um der Anode genügend Wasserstoff zur Verfügung stellen zu können. Indem das Restgas dem katalytischen Brenner 8 zugeführt wird, kann der darin enthaltene Wasserstoff im System vorteilhaft genutzt werden.

Wird mit einem flüssigen Brennmittel wie Benzin oder Methanol gearbeitet, kann die stromab des katalytischen Brenners 8 und/oder stromab der Expansionsmaschine 7 im Abgasstrom 4 mitgeführte Wärme vorteilhaft in einem zusätzlichen Wärmetauscher 13 zur Verdampfung von Brennmittel und/oder Wasser und/oder zur Reformierung des Brennmittels verwendet werden.

Die Erfindung ermöglicht durch die Nutzung der Abgasenergie somit eine kleinere Dimensionierung des Stromerzeugungssystems als bei einem konventionellen Brennstoffzellensystem, da im Vollastfall Brennstoff, z.B. zusätzliches Methanol, über Zudosierung in den katalytischen Brenner 8 und Erzeugung sehr hoher Abgastemperaturen über die Verdichter-/Expansionsmaschinen-Gruppe 5, 7 direkt in elektrische Energie umwandelbar ist, wobei durch die lastabhängige Einstellung des Wasserstoff-Überschusses insgesamt der Wasserstoff sehr effizient genutzt werden kann.

In einer besonders günstigen Ausgestaltung kann Wasserstoff als Brennmittel eingespart werden, indem die Brennstoffzellenstapel der Brennstoffzelleneinheit 1 besonders vorteilhaft verschaltet werden. Der Wasserstoff wird effizienter genutzt. In zusätzlicher Kombination mit einer lastabhängigen Einstellung des Wasserstoff-Überschusses beim Betrieb der Brennstoffzelle wird die Wasserstoff-Verwendung weiter verbessert.

Vorzugsweise werden mehrere Brennstoffzellenstapel strömungstechnisch parallel geschaltet und ein oder mehrere Brennstoffzellenstapel strömungstechnisch dazu derart in Reihe geschaltet, daß der Wasserstoff-Überschuß, der in der vorgeschalteten Parallelschaltung der Brennstoffzellenstapel nicht umgesetzt wird, ausreicht, um den oder die dazu in Serie geschalteten Brennstoffzellenstapel zu betreiben. Die Zahl der parallelgeschalteten und der in Serie geschalteten Brennstoffzellenstapel wird dabei so gewählt, daß alle Brennstoffzellenstapel in etwa mit einem vergleichbaren Wasserstoff-Überschuß betrieben werden können. Die Anordnung ermöglicht eine vorteilhafte Optimierung des Wasserstoffverbrauchs.

Eine übliche Brennstoffzelleneinheit 1 z.B. wird aus vier einzelnen Brennstoffzellenstapeln aufgebaut, die parallel durchströmt werden. Die Größe der Stapel richtet sich nach der elektrischen Spannung und/oder Leistung, die von der Brennstoffzelleneinheit 1 abverlangt wird. Für den üblichen Betrieb ist ein ausreichender Wasserstoffüberschuß λ vorzusehen, der typischerweise bei λ>1,2 liegt.

In einem Beispiel gemäß Fig. 4 sind drei Brennstoffzellenstapel strömungstechnisch parallel geschaltet und ein Brennstoffzellenstapel in Serie mit diesen drei parallel geschalteten Stapeln angeordnet, so daß der vierte Brennstoffzellenstapel vom Abgasstrom der drei vorgeschalteten Brennstoffzellenstapel durchströmt wird. Dabei erhält der vierte Brennstoffzellenstapel auch einen Überschuß an Wasserstoff. Die vier Brennstoffzellenstapel werden in der Figur insgesamt als Brennstoffzelleneinheit 1 bezeichnet.

Soll die Brennstoffzelleneinheit 1 insgesamt mit einem Wasserstoff-Überschuß von λ=1,1 betrieben werden, ist für vier Stapel in paralleler Anordnung insgesamt 4x1,1, d.h. ein Wasserstoff-Überschuß von λ'=4,4, vorzusehen. Werden jedoch nur drei Brennstoffzellenstapel parallel und der vierte Brennstoffzellenstapel in Serie dazu geschaltet, so erhält jeder der drei parallelen Brennstoffzellenstapel bei einem nominellen λ=1,1 einen Wasserstoff-Überschuß von λ=(4,4/3)≈1,5 und der vierte Brennstoffzellenstapel erhält im Abgasstrom einen vergleichbaren Wasserstoff-Überschuß von rund λ=1,4.

Der Wasserstoffüberschuß, den jeder einzelne, in der bevorzugten Verschaltung angeordnete Brennstoffzellenstapel individuell erhält, ist höher als der Wasserstoff-Überschuß von λ=1,1, mit dem die Brennstoffzelleneinheit 1 insgesamt betrieben wird. Für die individuellen Brennstoffzellenstapel der Brennstoffzelleneinheit 1 ist der Wasserstoff-Überschuß also effektiv erhöht. Wird die Brennstoffzelleneinheit 1 mit bevorzugtem sehr reinem Wasserstoff betrieben, erhält auch die in Strömungsrichtung letzte, vierte Zelle einerseits einen Wasserstoffüberschuß, der vergleichbar oder nur etwas geringer ist als der der vorgeschalteten Zellen und andererseits einen ausreichend sauberen Medienstrom, bei dem der Wasserstoff nicht unzulässig stark mit Verunreinigungen verdünnt ist.

Im Teillastbereich mit einem sehr geringen Wasserstoffüberschuß von λ=1,05 entspricht dies bei vier Brennstoffzellenstapel nominell 4x1,05, so daß bei drei parallel geschalteten Brennstoffzellenstapel der Wasserstoff-Überschuß pro Brennstoffzellenstapel λ=(4,2/3)=1,4 und einem im Abgasstrom der drei Brennstoffzellenstapel angeordneten vierten Brennstoffzellenstapel der Wasserstoff-Überschuß λ=1,2 beträgt.

Wird die dergestalt bevorzugt verschaltete Brennstoffzelleneinheit 1 mit einem lastabhängigen Wasserstoff-Überschuß betrieben, etwa hohem Überschuß bei Vollast und geringem Überschuß bei Teillast, so kann durch die beschriebene Parallel- und Serienverschaltung der Brennstoffzellenstapel erreicht werden, daß jeder individuelle Brennstoffzellenstapel in der Brennstoffzelleneinheit 1 trotzdem einen deutlich höheren Wasserstoff-Überschuß erhält.

Die Brennstoffzelleneinheit 1 kann auch aus einer größeren oder geringeren Zahl von Brennstoffzellenstapeln gebildet werden. Günstig ist dabei, daß zumindest zwei Brennstoffzellenstapel strömungstechnisch parallel geschaltet sind und im Abgasstrom der zumindest zwei Brennstoffzellenstapel zumindest ein weiterer Brennstoffzellenstapel strömungstechnisch in Serie zu den beiden Brennstoffzellenstapeln angeordnet ist, der mit dem Wasserstoff-Überschuß der vorgeschalteten Zellen betrieben wird.

In Kombination mit dem katalytischen Brenner 8 im Abgasstrom und der Rekuperation der Abgasenergie läßt sich vorteilhaft der Wasserstoffverbrauch der Brennstoffzelleneinheit 1 vermindern und gleichzeitig die Brennstoffzelleneinheit 1 kleiner auslegen.

## Patentansprüche

1. Brennstoffzellensystem mit einer Brennstoffzelleneinheit (1) mit Anode (2) und Kathode (3), mit einem Medien-Zustromweg zu der Anode (2) und einem Medien-Zustromweg für die Kathode (3), einem Anodenabgas-Strömungsweg (2') und einem Kathodenabgas-Strömungsweg (4), wobei im Zustromweg der Kathode (3) ein Verdichter (5) zur Luftversorgung der Kathode (3) vorgesehen ist, wobei im Kathodenabgas-Strömungsweg (4) ein katalytischer Brenner (8) angeordnet ist und der Anodenabgas-Strömungsweg (2') in den katalytischen Brenner (8) und/oder stromauf des katalytischen Brenners (8) in den Kathodenabgas-Strömungsweg (4) mündet und der vereinigte, katalytisch umgesetzte Brennstoffzellenabgasstrom in eine Expansionsmaschine (7) geleitet ist.

2. Anordnung nach Anspruch 1,
**dadurch gekennzeichnet,**
**daß** die Brennstoffzelleneinheit (1) aus mehreren Brennstoffzellenstapeln zusammengesetzt ist, wobei mindestens zwei Brennstoffzellenstapel strömungstechnisch parallel geschaltet sind und mindestens ein Brennstoffzellenstapel strömungstechnisch in Serie zu den parallel geschalteten Brennstoffzellenstapeln angeordnet ist.

3. Anordnung nach Anspruch 1,
**dadurch gekennzeichnet,**
**daß** die Expansionsmaschine (7) als Abgasturbolader oder Turbogenerator ausgebildet ist.

4. Anordnung nach Anspruch 1,
**dadurch gekennzeichnet,**
**daß** der Verdichter (5) über eine gemeinsame Welle (6) mit der Expansionsmaschine (7) gekoppelt ist.

5. Anordnung nach Anspruch 1,
**dadurch gekennzeichnet,**
**daß** der katalytische Brenner (8) eine Zudosiereinrichtung für Brennstoff aufweist.

6. Anordnung nach Anspruch 1,
**dadurch gekennzeichnet,**
**daß** stromauf der Brennstoffzelleneinheit (1) ein Gaserzeugungssystem mit einer Einheit (10) zur Erzeugung eines wasserstoffreichen Produktgases und einer Reinigungseinheit (11) zur selektiven Abtrennung von Wasserstoff aus dem Produktgas vorgesehen ist, wobei der abgetrennte Wasserstoff der Brennstoffzelleneinheit (1) und das Restgas dem katalytischen Brenner (8) zugeführt ist.

7. Verfahren zum Betreiben eines Brennstoffzellensystems mit einer Brennstoffzelleneinheit (1) mit Anode (2) und Kathode (3), mit einem Medien-Zustromweg zu der Anode (2) und einem Medien-Zustromweg für die Kathode (3), einem Anodenabgas-Strömungsweg (2') und einem Kathodenabgas-Strömungsweg (4), wobei im Zustromweg der Kathode (3) ein Verdichter (5) zur Luftversorgung der Kathode (3) eingesetzt wird, wobei das Anodenabgas in einen katalytischen Brenner (8) und/oder stromauf des katalytischen Brenners (8) in den Kathodenabgas-Strömungsweg (4) eingeleitet und der vereinigte, katalytisch umgesetzte Brennstoffzellenabgasstrom in eine Expansionsmaschine (7) geleitet wird,
**dadurch gekennzeichnet,**
**daß** der Brennstoffzelleneinheit (1) im Teillastbetrieb ein geringerer Wasserstoff-Überschuß als im Vollastbetrieb zugeführt wird.

8. Verfahren nach Anspruch 7,
**dadurch gekennzeichnet,**
**daß** der Brennstoffzelleneinheit (1) im Teillastbetrieb ein Wasserstoff-Überschuß von höchstens 10% und im Vollastbetrieb von mindestens 20% zugeführt wird.

9. Verfahren nach Anspruch 7,
**dadurch gekennzeichnet,**
**daß** das Kathodenabgas und/oder Anodenabgas beim Durchströmen des katalytischen Brenners (8) auf eine erste Temperatur zwischen 150°C und 1100°C erhitzt wird.

10. Verfahren nach einem der Ansprüche 7-9,
**dadurch gekennzeichnet,**
**daß** dem katalytischen Brenner (8) zur Verbrennung des Kathodenabgases ein Brennstoff zudosiert wird.

11. Verfahren nach einem der Ansprüche 7-10,
**dadurch gekennzeichnet,**
**daß** die Zudosierung des Brennstoffs in den katalytischen Brenner (8) gesteuert wird, wobei Daten aus einem Kennfeld einer Steuereinrichtung entnommen werden, welches einen Temperaturabfall des Kathodenabgases über der Expansionsmaschine (7) in Abhängigkeit von einem Druckverhältnis (π) der Expansionsmaschine (7) enthält.

12. Verfahren nach einem der Ansprüche 7-11,
**dadurch gekennzeichnet,**
**daß** das Kathodenabgas im katalytischen Brenner (8) so hoch erhitzt wird, daß die Expansionsmaschine (7) und der Verdichter (5) als Generator zusammenwirken und der Generator die Nutzleistung des Brennstoffzellensystems erhöht.

13. Verfahren nach einem der Ansprüche 7-12,
**dadurch gekennzeichnet,**
**daß** Brennstoffzellenstapel der Brennstoffzelleneinheit (1) strömungstechnisch parallel mit Wasserstoff-Überschuß durchströmt werden und ein strömungstechnisch in Serie geschalteter Brennstoffzellenstapel vom überschüssigen Wasserstoff mit Wasserstoff-Überschuß durchströmt wird.
